# EUROPEAN PATENT SPECIFICATION

(11) **EP 4 371 525 B1**
(45) Date of publication and mention of the grant of the patent: **26.11.2025**
(21) Application number: 23205503.8
(22) Date of filing: 24.10.2023
(51) Int. Cl.: A61C 9/00, A61C 19/05

(54) **DETECTION APPARATUS, DETECTION METHOD, DETECTION PROGRAM, AND DETECTION SYSTEM**
DETEKTIONSVORRICHTUNG, DETEKTIONSVERFAHREN, DETEKTIONSPROGRAMM UND DETEKTIONSSYSTEM
APPAREIL DE DÉTECTION, PROCÉDÉ DE DÉTECTION, PROGRAMME DE DÉTECTION ET SYSTÈME DE DÉTECTION

(30) Priority: 15.11.2022 JP 2022182611
(43) Date of publication of application: 22.05.2024
(73) Proprietor: J. MORITA MFG. CORP., Fushimi-ku Kyoto-shi Kyoto 612-8533 (JP)
(72) Inventor: KAJI, Ryosuke, Kyoto, 612-8533 (JP); NISHIMURA, Mikinori, Kyoto, 612-8533 (JP)
(74) Representative: Müller Hoffmann & Partner

(56) References cited:
- US-A1- 2013 066 598
- US-A1- 2018 005 377
- US-A1- 2022 323 190

## Description

### BACKGROUND

The present disclosure relates to a detection apparatus, a detection method, a detection program, and a detection system that detect a premature contact position at which an upper row of teeth prematurely contacts a lower row of teeth upon occlusion.

It is of clinical importance to know a premature contact position upon occlusion of upper and lower rows of teeth. The premature contact position is a position at which a row of teeth of an upper jaw first contacts a row of teeth of a lower jaw upon occlusion of the upper and lower rows of teeth. In a case where a position at which the upper row of teeth prematurely contacts the lower row of teeth is biased, mastication is more frequently performed at the premature contact position, and thus, there is a possibility of adverse effects on health due to distortion of the jaw or loss of balance of the body. In related art, in the dental field, treatment such as drilling of the premature contact position has been performed so that the whole row of teeth of the upper jaw contacts the whole row of teeth of the lower jaw at the same time with balance.

As a technique for detecting the premature contact position, Japanese Patent Laying-Open No. 2005-279094 discloses a dental occlusal pressure measurement apparatus including a sensor sheet on which an ink material is applied and which is to be bitten by a subject, and a computer that processes data indicating pressure detection points of the sensor sheet upon occlusion. The dental occlusal pressure measurement apparatus can detect the premature contact position by detecting contact positions of teeth and an occlusal pressure using the sensor sheet.

US 2022/0323190 A1 discloses a method for determining biting occlusion of a patient's teeth including generating a first 3D digital model of the patient's lower arch in non-occlusion. A second 3D digital model of the patient's upper arch in non-occlusion may be generated. A third 3D digital model of the patient's upper and lower arches in biting occlusion may be generated. The first and second 3D digital models may be aligned with corresponding teeth of the third 3D digital model to generate a fourth 3D model of the patient's teeth in biting occlusion.

### SUMMARY

According to the dental occlusal pressure measurement apparatus disclosed in Japanese Patent Laying-Open No. 2005-279094, it is possible to detect the premature contact position using the sensor sheet. However, the subject needs to bite the sensor sheet to detect the premature contact position, and thus, there is a possibility that the contact positions of the teeth and the occlusal pressure may fluctuate in accordance with a degree of occlusion of the sensor sheet by the subject, which may make it impossible to detect the premature contact position with high accuracy.

The present disclosure has been made to solve such a problem and is directed to providing a technique capable of detecting a premature contact position with high accuracy.

The above problem is solved by the claimed subject-matter, which defines the present invention. Embodiments not covered by the claimed subject-matter do not form part of the invention.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a view illustrating an application example of a detection system and a detection apparatus.
Fig. 2 is a block diagram illustrating a hardware configuration of the detection system and the detection apparatus.
Fig. 3 is a view illustrating outline of detection processing of a premature contact position to be executed by the detection apparatus.
Fig. 4 is a view for explaining synthetic data.
Fig. 5 is a view illustrating outline of the detection processing of the premature contact position to be executed by the detection apparatus.
Fig. 6 is a flowchart for explaining one example of the detection processing to be executed by the detection apparatus.
Fig. 7 is a view for explaining uneven distribution to be used by a detection apparatus according to a modification.

### DESCRIPTION

The present disclosure will be described in detail with reference to the drawings. Note that the same reference numerals will be assigned to the same or corresponding portions in the drawings, and redundant description will be omitted.

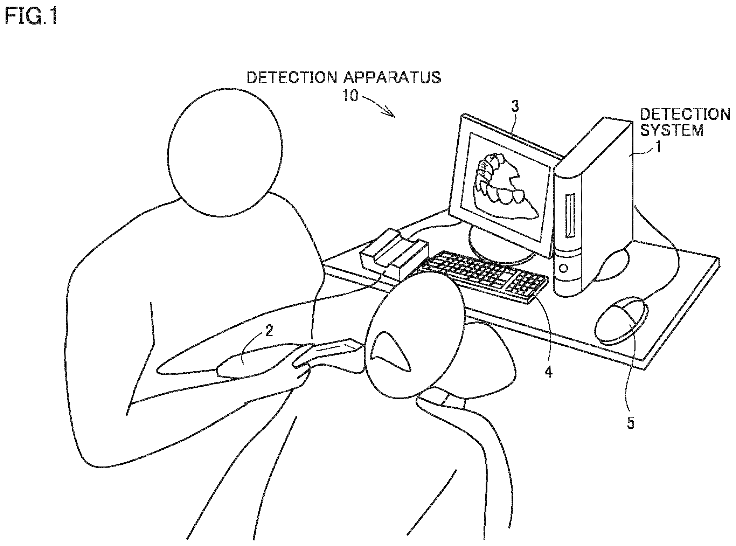

An application example of a detection system 10 and a detection apparatus 1 will be described with reference to Fig. 1. Fig. 1 is a view illustrating an application example of detection system 10 and detection apparatus 1.

As illustrated in Fig. 1, detection system 10 includes detection apparatus 1 and a three-dimensional scanner 2. A user can acquire three-dimensional data indicating shapes of a plurality of objects inside the oral cavity by scanning inside of the oral cavity of a subject using three-dimensional scanner 2. Detection apparatus 1 is connected so as to be able to perform communication with three-dimensional scanner 2 and processes the three-dimensional data acquired by three-dimensional scanner 2.

The "user" may be anyone such as a practitioner such as a dentist, a dental assistant, a professor or a student of a dental university, a dental technician, an engineer of a manufacturer and a worker at a manufacturing factory, who acquires three-dimensional data of objects such as teeth using three-dimensional scanner 2. The "subject" may be anyone such as a patient at a dental clinic, and a subject in a dental university, who can be a target to be scanned by three-dimensional scanner 2.

The "object" to be scanned may be anything such as upper and lower rows of teeth and gums inside the oral cavity, that can be target to be scanned by three-dimensional scanner 2. The "upper and lower rows of teeth" include a row of teeth of an upper jaw and a row of teeth of a lower jaw. When the upper and lower rows of teeth are in an open state, the row of teeth of the upper jaw is separate from the row of teeth of the lower jaw. When the upper and lower rows of teeth are in an occlusal state, the row of teeth of the upper jaw contacts the row of teeth of the lower jaw.

Three-dimensional scanner 2 is a so-called intra oral scanner (IOS) capable of optically capturing an image of inside of the oral cavity of a subject using a confocal method or a triangulation method. Specifically, three-dimensional scanner 2 acquires position information (coordinates of respective axes of a longitudinal direction, a lateral direction and a height direction) of each point of a point cloud (a plurality of points) indicating surface shapes of targets to be scanned (objects) as the three-dimensional data using an optical sensor, or the like, by scanning the objects inside the oral cavity. In other words, the three-dimensional data is position data (IOS data) including the position information of each point of the point cloud that constitutes surfaces of the objects placed on a certain coordinate space.

The three-dimensional data that can be acquired by scanning the row of teeth of the upper jaw with three-dimensional scanner 2 when the upper and lower rows of teeth are in an open state includes position information of each point of a point cloud constituting surfaces of at least one tooth included in the row of teeth of the upper jaw and the gum that supports the at least one tooth. Such three-dimensional data indicating a three-dimensional shape of the row of teeth of the upper jaw in the open state will be also referred to as "upper-jaw tooth row data".

The three-dimensional data that can be acquired by scanning the row of teeth of the lower jaw with three-dimensional scanner 2 when the upper and lower rows of teeth are in an open state includes position information of each point of a point cloud constituting surfaces of at least one tooth included in the row of teeth of the lower jaw and the gum that supports the at least one tooth. Such three-dimensional data indicating a three-dimensional shape of the row of teeth of the lower jaw in the open state will be also referred to as "lower-jaw tooth row data".

The three-dimensional data that can be acquired by scanning the row of teeth of the upper jaw and the row of teeth of the lower jaw with three-dimensional scanner 2 when the upper and lower rows of teeth are in an occlusal state includes position information of each point of a point cloud constituting surfaces of at least one tooth included in the row of teeth of the upper jaw, the gum that supports the at least one tooth of the upper jaw, at least one tooth included in the row of teeth of the lower jaw and the gum that support the at least one tooth of the lower jaw. Such three-dimensional data indicating a three-dimensional shape of the upper and lower rows of teeth in the occlusal state will be also referred to as "occlusion data".

Detection apparatus 1 generates a two-dimensional image indicating two dimensional objects viewed from an arbitrary point of view on the basis of the three-dimensional data of the objects acquired by three-dimensional scanner 2. Such a two-dimensional image is an image generated by processing or editing the three-dimensional data and is also referred to as a "rendering image". Detection apparatus 1 can show surfaces of the objects inside the oral cavity viewed from an arbitrary point of view to the user by displaying the generated rendering image on a display 3.

According to detection system 10 as described above, for example, the user can display, on display 3, the rendering image indicating two-dimensional upper and lower rows of teeth viewed from an arbitrary point of view by scanning the upper and lower rows of teeth inside the oral cavity using three-dimensional scanner 2.

Here, in related art, articulating paper is used as a method for detecting a premature contact position upon occlusion of the upper and lower rows of teeth. The articulating paper is a sheet of paper on which paint of red, blue, or the like, is transferred to a surface. If the subject bites the articulating paper with the row of teeth of the upper jaw and the row of teeth of the lower jaw, part of the occlusal surface is colored in accordance with occlusion. By confirming such a coloring aspect on the occlusal surface, a dentist, or the like, can detect the premature contact position. For example, a dark-colored portion on the occlusal surface is more likely to be a portion at which the row of teeth of the upper jaw prematurely contacts the row of teeth of the lower jaw than a light-colored portion.

The dentist, or the like, can detect the premature contact position to some extent by using the above-described articulating paper. However, the subject needs to bite the articulating paper to detect the premature contact position, and thus, there is a possibility that contact positions of the teeth and an occlusal pressure may fluctuate in accordance with a degree of occlusion of the articulating paper by the subject, which may make it impossible to detect the premature contact position with high accuracy.

Thus, in detection system 10, detection apparatus 1 detects a premature contact position on the basis of three-dimensional data of objects inside the oral cavity acquired by three-dimensional scanner 2. Detection processing of the premature contact position to be executed by detection apparatus 1 will be specifically described below.

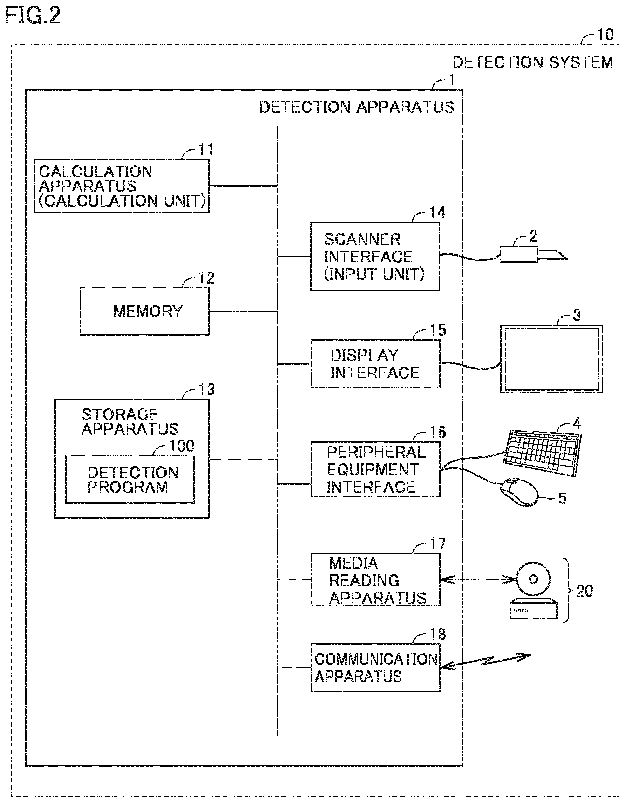

A hardware configuration of detection system 10 and detection apparatus 1 will be described with reference to Fig. 2. Fig. 2 is a block diagram illustrating a hardware configuration of detection system 10 and detection apparatus 1. Detection apparatus 1 may be implemented by a general-purpose computer or may be implemented by a computer dedicated for detection system 10.

As illustrated in Fig. 2, detection apparatus 1 includes a calculation apparatus 11, a memory 12, a storage apparatus 13, a scanner interface 14, a display interface 15, a peripheral equipment interface 16, a media reading apparatus 17 and a communication apparatus 18 as main hardware elements.

Calculation apparatus 11 has a function of a "calculation unit" and is constituted with a computer such as a processor. The processor is constituted with, for example, a microcontroller, a central processing unit (CPU), a micro-processing unit (MPU), or the like. Note that while the processor has functions of executing various kinds of processing by executing programs, part or all of these functions may be implemented using a dedicated hardware circuit such as an application specific integrated circuit (ASIC), a graphics processing unit (GPU) or a field-programmable gate array (FPGA). The "processor" is not limited to a narrowly defined processor that executes processing in a stored program scheme, like a CPU or an MPU and can include a hardwired circuit such as an ASIC or an FPGA. Thus, the processor can read as a processing circuitry for which processing is defined in advance by a computer-readable code and/or a hardwired circuit. Note that the processor may be constituted with one chip or may be constituted with a plurality of chips. Further, the processor and the related processing circuitry may be constituted with a plurality of computers interconnected in a wired or wireless manner via a local area network or a wireless network. The processor and the related processing circuitry may be constituted with a cloud computer that remotely performs calculation on the basis of input data and outputs a calculation result to another device located at a separate position.

Memory 12 provides a storage area for storing a program code, a work memory, or the like, when the processor of calculation apparatus 11 executes various kinds of programs. Memory 12 may be one or a plurality of non-transitory computer readable medium. Examples of memory 12 can include a volatile memory such as a dynamic random access memory (DRAM) and a static random access memory (SRAM) or a non-volatile memory such as a read only memory (ROM) and a flash memory.

Storage apparatus 13 provides a storage area for storing various kinds of programs that can be read and executed by the processor of calculation apparatus 11 and various kinds of data. Storage apparatus 13 may be one or a plurality of computer readable storage medium. Examples of storage apparatus 13 can include a storage apparatus such as a hard disk drive (HDD) and a solid state drive (SSD).

Storage apparatus 13 stores a detection program 100. Detection program 100 is a program describing a content of detection processing for detecting the premature contact position on the basis of the three-dimensional data of the objects inside the oral cavity acquired by three-dimensional scanner 2 and can be read and executed by calculation apparatus 11. Detection program 100 may be input by the user using a keyboard 4 and a mouse 5 and executed, may be read from a recording medium 20 by media reading apparatus 17 or may be acquired from other apparatuses such as a server by communication apparatus 18 via a network.

Scanner interface 14 is an interface having a function of an "input unit" and connecting three-dimensional scanner 2. Scanner interface 14 may be constituted with an input circuitry. Scanner interface 14 implements input/output of data between detection apparatus 1 and three-dimensional scanner 2. Detection apparatus 1 is connected to three-dimensional scanner 2 in a wired manner using a cable or in a wireless manner (such as WiFi and BlueTooth (registered trademark)).

Display interface 15 is an interface for connecting display 3 and implements input/output data between detection apparatus 1 and display 3.

Peripheral equipment interface 16 is an interface for connecting peripheral equipment such as keyboard 4 and mouse 5 and implements input/output of data between detection apparatus 1 and the peripheral equipment.

Media reading apparatus 17 reads out data stored in recording medium 20 or writes data in recording medium 20. Recording medium 20 is a non-transitory and tangible computer readable storage medium and may take any form such as a compact disc (CD), a digital versatile disc (DVD) or a universal serial bus (USB) memory if the medium can record various kinds of data. Recording medium 20 can store detection program 100, and calculation apparatus 11 can execute detection program 100 read out from recording medium 20.

Communication apparatus 18 transmits/receives data to/from an external apparatus through wired communication or wireless communication. For example, communication apparatus 18 can transmit data indicating a detection result of the premature contact position to a server apparatus by being connected so as to be able to perform communication with a hospital server or a server outside a hospital (for example, a cloud server) in a wired manner using a cable or in a wireless manner (such as WiFi and BlueTooth (registered trademark)).

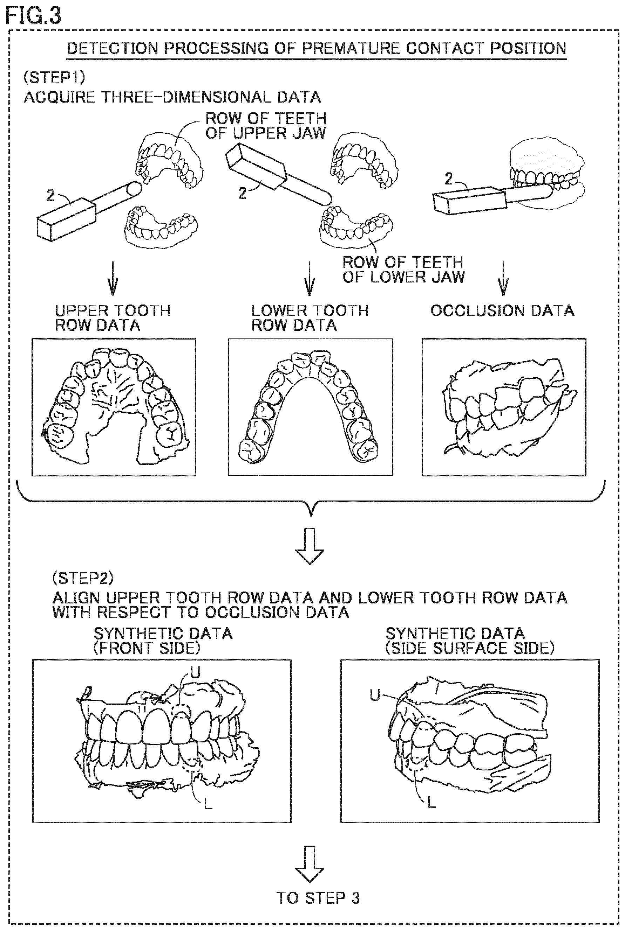

Outline of the detection processing of the premature contact position to be executed by detection apparatus 1 will be described with reference to Fig. 3 to Fig. 5.

Fig. 3 is a view illustrating outline of the detection processing of the premature contact position to be executed by detection apparatus 1. As illustrated in Fig. 3, in STEP 1, the user acquires three-dimensional data of the upper and lower rows of teeth of the subject. Specifically, the user puts the upper and lower rows of teeth of the subject into an open state and mainly scans the occlusal surface and side surfaces of the row of teeth of the upper jaw using three-dimensional scanner 2. This enables three-dimensional scanner 2 to acquire upper-jaw tooth row data indicating a three-dimensional shape of the row of teeth of the upper jaw. The upper-jaw tooth row data is output to detection apparatus 1 via scanner interface 14. Detection apparatus 1 can generate a rendering image indicating the two-dimensional row of teeth of the upper jaw viewed from an arbitrary point of view on the basis of the acquired upper-jaw tooth row data.

Further, the user puts the upper and lower rows of teeth of the subject into the open state and manually scans mainly the occlusal surface and side surfaces (buccal surface and lingual surface) of the row of teeth of the lower jaw using three-dimensional scanner 2. This enables three-dimensional scanner 2 to acquire lower-jaw tooth row data indicating a three-dimensional shape of the row of teeth of the lower jaw. The lower-jaw tooth row data is output to detection apparatus 1 via scanner interface 14. Detection apparatus 1 can generate a rendering image indicating the two-dimensional row of teeth of the lower jaw viewed from an arbitrary point of view on the basis of the acquired lower-jaw tooth row data.

Further, the user puts the upper and lower rows of teeth of the subject into the occlusal state and manually scans mainly the side surface (buccal surface) of the upper and lower rows of teeth in the occlusal state. This enables three-dimensional scanner 2 to acquire occlusion data indicating a three-dimensional shape of the upper and lower rows of teeth. The occlusion data is output to detection apparatus 1 via scanner interface 14. Detection apparatus 1 can generate a rendering image indicating the two-dimensional upper and lower rows of teeth in the occlusal state viewed from an arbitrary point of view on the basis of the acquired occlusion data.

As described above, the upper-jaw tooth row data and the lower-jaw tooth row data are individually acquired, and thus, it is necessary to synthesize the upper-jaw tooth row data and the lower-jaw tooth row data in accordance with the upper and lower rows of teeth in the occlusal state to freely put the rendering image based on the upper-jaw tooth row data and the rendering image based on the lower-jaw tooth row data into the open state or the occlusal state. Thus, in STEP 2, detection apparatus 1 generates synthetic data indicating a three-dimensional shape of the upper and lower rows of teeth in the occlusal state by synthesizing the upper-jaw tooth row data and the lower-jaw tooth row data using the occlusion data as a reference.

Specifically, detection apparatus 1 converts the individually acquired upper-jaw tooth row data, lower-jaw tooth row data and occlusion data into three-dimensional data of a common coordinate system. For example, detection apparatus 1 converts a coordinate system of each of the upper-jaw tooth row data and the lower-jaw tooth row data so as to suit a coordinate system of the occlusion data. Alternatively, detection apparatus 1 converts the coordinate system of each of the upper-jaw tooth row data, the lower-jaw tooth row data, and the occlusion data so as to suit a common coordinate system determined in advance.

Then, detection apparatus 1 aligns the upper-jaw tooth row data in the common coordinate system with a portion corresponding to the row of teeth of the upper jaw among the occlusion data in the same common coordinate system. More specifically, detection apparatus 1 aligns three-dimensional data of a point cloud corresponding to the upper-jaw tooth row data including a peripheral gum with three-dimensional data of a point cloud corresponding to the row of teeth of the upper jaw including the peripheral gum among the occlusion data. In this event, detection apparatus 1 determines a position of three-dimensional data of each point of the upper-jaw tooth row data including the peripheral gum with respect to each point of the occlusion data including the peripheral gum using the vicinity of the center of a vertical direction of the upper-jaw tooth row data, for example, a gum margin (a boundary portion U indicated in Fig. 3) that is a boundary portion between the teeth and the gum as a mark. Note that detection apparatus 1 only needs to determine the position of the three-dimensional data of each point of the upper-jaw tooth row data so as to minimize an error with each point of the occlusion data including the peripheral gum using a portion having a characteristic shape with a large change in irregularities in the row of teeth of the upper jaw as a mark as well as using boundary portion U between the teeth and the gum as a mark.

Further, detection apparatus 1 aligns the lower-jaw tooth row data in the common coordinate system with a portion corresponding to the row of teeth of the lower jaw among the occlusion data in the same common coordinate system. More specifically, detection apparatus 1 aligns three-dimensional data of a point cloud corresponding to the lower-jaw tooth row data including a peripheral gum with three-dimensional data of a point cloud corresponding to the row of teeth of the lower jaw including the peripheral gum among the occlusion data. In this event, detection apparatus 1 determines a position of three-dimensional data of each point of the lower-jaw tooth row data including the peripheral gum with respect to each point of the occlusion data including the peripheral gum using the vicinity of the center of a vertical direction of the lower-jaw tooth row data, for example, a gum margin (a boundary portion L indicated in Fig. 3) that is a boundary portion between the teeth and the gum as a mark. Note that detection apparatus 1 only needs to determine the position of the three-dimensional data of each point of the lower-jaw tooth row data so as to minimize an error with each point of the occlusion data including the peripheral gum using a portion having a characteristic shape with a large change in irregularities in the row of teeth of the lower jaw as a mark as well as using boundary portion L between the teeth and the gum as a mark.

The synthetic data generated in STEP 2 constitutes three-dimensional data of the upper and lower rows of teeth in the occlusal state using the individually acquired upper-jaw tooth row data and lower-jaw tooth row data. Thus, detection apparatus 1 can update the upper-jaw tooth row data so that a state of the upper and lower rows of teeth in the rendering image is displaced from the occlusal state to the open state. For example, for an arbitrary point included in the upper-jaw tooth row data, detection apparatus 1 can move the arbitrary point away from a point included in the lower-jaw tooth row data by updating a coordinate in a height direction to the upper jaw side. Further, detection apparatus 1 can update the lower-jaw tooth row data so that a state of the upper and lower rows of teeth in the rendering image is displaced from the occlusal state to the open state. For example, for an arbitrary point included in the lower-jaw tooth row data, detection apparatus 1 can move the arbitrary point from a point included in the upper-jaw tooth row data by updating a coordinate in a height direction to the lower jaw side. Detection apparatus 1 can show an aspect where the state of the upper and lower rows of teeth is displaced from the occlusal state to the open state by generating a rendering image indicating two-dimensional upper and lower rows of teeth viewed from an arbitrary point of view and displaying the rendering image on display 3 at each timing at which such data update is performed.

As described in STEP 1, the upper-jaw tooth row data including the peripheral gum and the lower-jaw tooth row data including the peripheral gum are aligned so as to minimize an error with each point in the occlusion data including the peripheral gum. However, while the upper-jaw tooth row data and the lower-jaw tooth row data are three-dimensional data of the rows of teeth in the open state, the occlusion data is three-dimensional data of the rows of teeth in the occlusal state. Further, while in the occlusal state, the row of teeth of the upper jaw contacts the row of teeth of the lower jaw on the occlusal surface, and thus, the row of teeth of the upper jaw and the row of teeth of the lower jaw apply load to each other, in the open state, the row of teeth of the upper jaw does not contact the row of teeth of the lower jaw, and thus, the row of teeth of the upper jaw and the row of teeth of the lower jaw do not apply load to each other.

Specifically, the load from the row of teeth of the lower jaw is applied to the row of teeth of the upper jaw, and thus, roots of the teeth of the upper jaw apply pressure to a periodontal membrane. Thus, a distance between the gum margin (boundary portion U indicated in Fig. 3) and tips of the teeth of the upper jaw is different between the upper-jaw tooth row data and the occlusion data. Specifically, the distance between the gum margin and the tips of the teeth of the upper jaw is longer in the upper-jaw tooth row data than in the occlusion data. In other words, an arbitrary point corresponding to the row of teeth of the upper jaw among the occlusion data acquired in the occlusal state moves in a direction in which the gum of the upper jaw is located from a point corresponding to the arbitrary point among the upper-jaw tooth row data acquired in the open state.

Further, the load from the row of teeth of the upper jaw is applied to the row of teeth of the lower jaw, and thus, roots of the teeth of the lower jaw apply pressure to a periodontal membrane. Thus, a distance between the gum margin (boundary portion L indicated in Fig. 3) and tips of the teeth of the lower jaw is different between the lower-jaw tooth row data and the occlusion data. Specifically, the distance between the gum margin and the tips of the teeth of the lower jaw is longer in the lower-jaw tooth row data than in the occlusion data. In other words, an arbitrary point corresponding to the row of teeth of the lower jaw among the occlusion data acquired in the occlusal state moves in a direction in which the gum of the lower jaw is located from a point corresponding to the arbitrary point among the lower-jaw tooth row data acquired in the open state. By this means, the tips of the teeth of the upper jaw can intersect the tips of the teeth of the lower jaw in the upper-jaw tooth row data and the lower-jaw tooth row data after alignment is performed using the occlusion data as a reference.

In this manner, some misalignment can occur between each point corresponding to the occlusion data acquired in the occlusal state and each point corresponding to the upper-jaw tooth row data and the lower-jaw tooth row data acquired in the open state in a case where attention is focused on the same point. While in the actual upper and lower rows of teeth, the row of teeth of the upper jaw cannot be physically located on the lower jaw side than the row of teeth of the lower jaw, in the synthetic data generated in STEP 3, the tips of the teeth of the upper jaw can intersect the tips of the teeth of the lower jaw, and thus, there is a case where the point corresponding to the upper-jaw tooth row data is located on the lower jaw side than the point corresponding to the lower-jaw tooth row data.

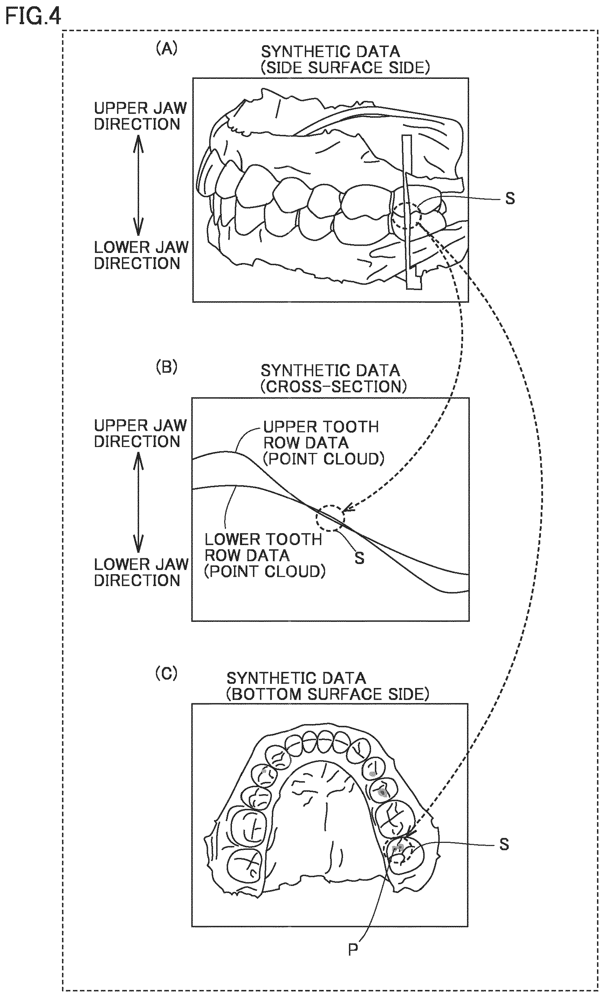

The synthetic data will be specifically described with reference to Fig. 4. Fig. 4 is a view for explaining the synthetic data. Fig. 4(A) illustrates a rendering image indicating a side surface side of the upper and lower rows of teeth generated on the basis of the synthetic data. As illustrated in Fig. 4(A), in the rendering image of the synthetic data, a case is assumed where the row of teeth is cut in the vertical direction. Further, in a cross-section of the upper and lower rows of teeth, a portion in which the row of teeth of the upper jaw corresponding to the upper-jaw tooth row data overlaps the row of teeth of the lower jaw corresponding to the lower-jaw tooth row data is indicated as a region S.

Fig. 4(B) illustrates an enlarged view of a portion including region S in the rendering image of the synthetic data. As indicated with region S in Fig. 4(B), while the point corresponding to the upper-jaw tooth row data cannot be physically located on the lower jaw side than the point corresponding to the lower-jaw tooth row data in the actual upper and lower rows of teeth, there is a case where the point corresponding to the upper-jaw tooth row data is located on the lower jaw side than the point corresponding to the lower-jaw tooth row data on the data.

Fig. 4(C) illustrates a view in a case where the upper and lower rows of teeth are viewed from a bottom surface side (lower jaw side) in the rendering image of the synthetic data. As illustrated in Fig. 4(C), in region S, the teeth included in the row of teeth of the upper jaw appears as if they project from the row of teeth of the lower jaw as a result of the point corresponding to the upper-jaw tooth row data being located on the lower jaw side than the point corresponding to the lower-jaw tooth row data. Hereinafter, such a projecting portion will be also referred to as a projecting portion P.

Detection apparatus 1 updates at least one of the upper-jaw tooth row data and the lower-jaw tooth row data so that the state of the upper and lower rows of teeth in the rendering image is displaced from the occlusal state to the open state and detects the premature contact position in accordance with whether or not projecting portion P as illustrated in Fig. 4(C) exists upon updating.

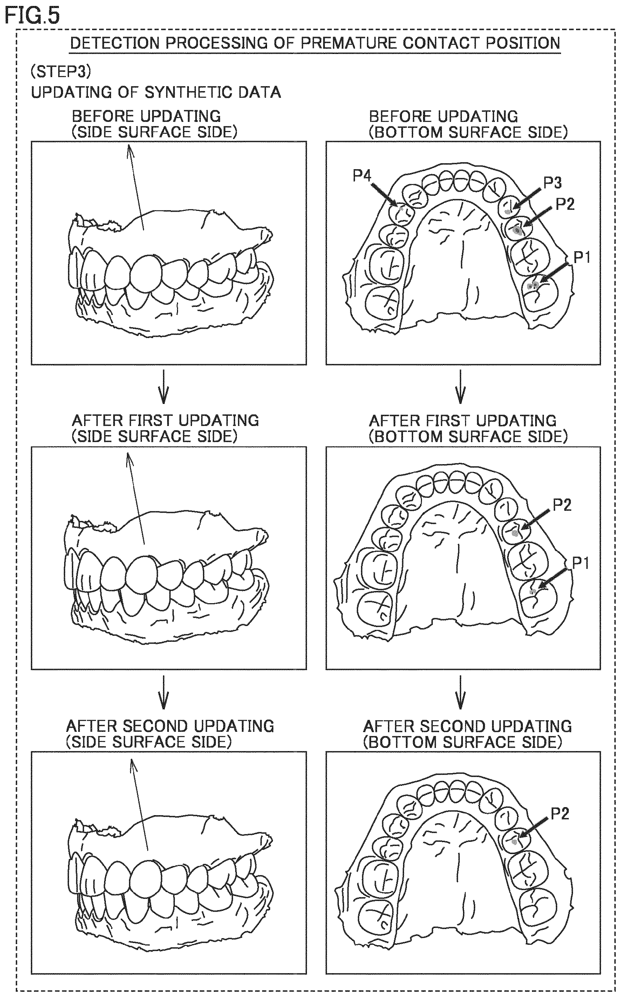

For example, Fig. 5 is a view illustrating outline of the detection processing of the premature contact position to be executed by detection apparatus 1. As illustrated in Fig. 5, in STEP 3 following STEP 2 in Fig. 3, detection apparatus 1 detects the premature contact position by updating the synthetic data. Specifically, before the synthetic data is updated, some points corresponding to the upper-jaw tooth row data are located on the lower jaw side than the points corresponding to the lower-jaw tooth row data. Thus, in the rendering image in a case where the upper and lower rows of teeth are viewed from the bottom surface side (opposite side of surfaces of the lower rows of teeth, on the lower jaw side), a plurality of projecting portions P1 to P3 at which the teeth included in the row of teeth of the upper jaw project from the row of teeth of the lower jaw are indicated.

If detection apparatus 1 updates the synthetic data so that the state of the upper and lower rows of teeth is displaced from the occlusal state to the open state, each point corresponding to the upper-jaw tooth row data is separate from each point corresponding to the lower-jaw tooth row data. For example, in the rendering image in a case where the upper and lower rows of teeth are viewed from the bottom surface side after first updating, only projecting portions P1 and P2 among projecting portions P1 to P3 before updating remains. Further, a projecting area of projecting portions P1 and P2 after the first updating becomes smaller than a projecting area of projecting portions P1 and P2 before updating. By this means, detection apparatus 1 can detect that the points corresponding to the upper-jaw tooth row data corresponding to projecting portions P3 and P4 no longer contacts the points corresponding to the lower-jaw tooth row data as a result of updating the synthetic data. Further, detection apparatus 1 can detect that an area of a portion in which the points corresponding to the upper-jaw tooth row data corresponding to projecting portions P1 and P2 contact the points corresponding to the lower-jaw tooth row data becomes smaller as a result of updating the synthetic data.

If detection apparatus 1 further updates the synthetic data so that the state of the upper and lower rows of teeth is displaced from the occlusal state to the open state, each point corresponding to the upper-jaw tooth row data is further separate from each point corresponding to the lower-jaw tooth row data. For example, in the rendering image in a case where the upper and lower rows of teeth after second updating are viewed from the bottom surface side, only projecting portion P2 among projecting portions P1 and P2 after the first updating remains. Further, a projecting area of projecting portion P2 after the second updating becomes smaller than a projecting area of projecting portion P2 before updating. By this means, detection apparatus 1 can detect that the point corresponding to the upper-jaw tooth row data corresponding to projecting portion P1 no longer contacts the point corresponding to the lower-jaw tooth row data by updating the synthetic data. Further, detection apparatus 1 can detect that an area of a portion in which the point corresponding to the upper-jaw tooth row data corresponding to projecting portion P2 contacts the point corresponding to the lower-jaw tooth row data becomes smaller by updating the synthetic data.

In this manner, in a case where the synthetic data is updated so that the state of the upper and lower rows of teeth is displaced from the occlusal state to the open state, detection apparatus 1 can detect a portion (projecting portion P2 in the example in Fig. 5) of the upper and lower rows of teeth in which the row of teeth of the upper jaw contacts the row of teeth of the lower jaw until the end, as the premature contact position.

Further, detection apparatus 1 can calculate an amount of projecting of the point corresponding to the premature contact position that is more than that of other points on the basis of an updating amount of the synthetic data, that is, an updating amount of at least one of the upper-jaw tooth row data and the lower-jaw tooth row data. For example, in the example in Fig. 5, if it is assumed that projecting portion P1 disappears in a case where third updating is performed for the update data, detection apparatus 1 can predict that projecting portion P2 projects more than projecting portion P3 and projecting portion P4 by an amount corresponding to an amount obtained by adding an updating amount of the first updating, an updating amount of the second updating and an updating amount of the third updating, and further can predict that projecting portion P2 projects more than projecting portion P1 by an amount corresponding to an amount obtained by adding the updating amount of the second updating and the updating amount of the third updating. Note that while the updating amount of each updating can be arbitrarily set by the user, for example, the updating amount of each updating is 0.1 mm to 0.3 mm.

Detection apparatus 1 may move the point corresponding to at least one of the upper-jaw tooth row data and the lower-jaw tooth row data in any direction if the moving direction of the point corresponding to at least one of the upper-jaw tooth row data and the lower-jaw tooth row data is a direction in which the state of the upper and lower rows of teeth is displaced from the occlusal state to the open state.

For example, detection apparatus 1 may make it appear as if the state of the upper and lower rows of teeth were displaced from the occlusal state to the open state in the rendering image by updating a coordinate in a height direction of the point corresponding to the upper-jaw tooth row data on the upper jaw side. Further, detection apparatus 1 may make it appear as if the state of the upper and lower rows of teeth were displaced from the occlusal state to the open state in the rendering image by updating a coordinate in a height direction of the point corresponding to the lower-jaw tooth row data on the lower jaw side.

Alternatively, detection apparatus 1 may update at least one of the upper-jaw tooth row data and the lower-jaw tooth row data on the basis of jaw motion data inferred on the basis of the positions of the upper and lower rows of teeth in the occlusal state. Specifically, detection apparatus 1 may predict motion of the upper jaw and the lower jaw on the basis of the upper-jaw tooth row data and the lower-jaw tooth row data included in the synthetic data. Further, detection apparatus 1 may make it appear as if the state of the upper and lower rows of teeth were displaced from the occlusal state to the open state in the rendering image by updating at least one of the upper-jaw tooth row data and the lower-jaw tooth row data on the basis of a prediction result of motion of the jaws.

Further, detection apparatus 1 may update at least one of the upper-jaw tooth row data and the lower-jaw tooth row data on the basis of jaw motion data measured for the upper jaw and the lower jaw. Specifically, detection apparatus 1 may acquire jaw motion data of the subject measured in advance by the subject wearing a jig, or the like. Then, detection apparatus 1 may make it appear as if the state of the upper and lower rows of teeth were displaced from the occlusal state to the open state in the rendering image by updating at least one of the upper-jaw tooth row data and the lower-jaw tooth row data on the basis of the acquired jaw motion data.

Further, detection apparatus 1 may update at least one of the upper-jaw tooth row data and the lower-jaw tooth row data on the basis of predetermined average jaw motion data. Specifically, detection apparatus 1 may acquire an average value of jaw motion data of a plurality of people in advance. Such an average value of the jaw motion data may be distinguished in accordance with gender, age, or the like. Then, detection apparatus 1 may make it appear as if the state of the upper and lower rows of teeth were displaced from the occlusal state to the open state in the rendering image by updating at least one of the upper-jaw tooth row data and the lower-jaw tooth row data on the basis of the acquired average value of the jaw motion data.

Further, detection apparatus 1 may correct various kinds of jaw motion data as described above on the basis of a check result of occlusion between the upper and lower rows of teeth using articulating paper and may update at least one of the upper-jaw tooth row data and the lower-jaw tooth row data on the basis of the corrected jaw motion data. For example, detection apparatus 1 may correct the jaw motion data so that the row of teeth of the upper jaw is separate from the row of teeth of the lower jaw in a portion (for example, a densely colored portion) in which the teeth of the upper jaw are likely to prematurely contact the teeth of the lower jaw on the basis of a coloring aspect (color that changes in accordance with biting force) on the occlusal surface appearing when the subject bites the articulating paper between the row of teeth of the upper jaw and the row of teeth of the lower jaw.

In this manner, detection apparatus 1 can update at least one of the upper-jaw tooth row data and the lower-jaw tooth row data so as to be closer to jaw motion of the subject by correcting the jaw motion data on the basis of the check result of occlusion between the upper and lower rows of teeth using the articulating paper.

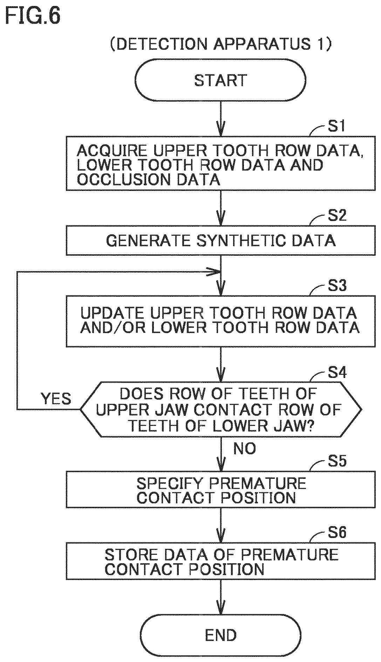

A flow of the detection processing of the premature contact position to be executed by detection apparatus 1 will be described with reference to Fig. 6. Fig. 6 is a flowchart for explaining an example of the detection processing to be executed by detection apparatus 1. Detection apparatus 1 (calculation apparatus 11) can execute the detection processing indicated in Fig. 6 by executing detection program 100. Note that in Fig. 6, "S" is used as an abbreviation of "STEP".

As indicated in Fig. 6, detection apparatus 1 acquires the upper-jaw tooth row data, the lower-jaw tooth row data and the occlusion data individually acquired by three-dimensional scanner 2 (S1). Detection apparatus 1 generates synthetic data indicating a three-dimensional shape of the upper and lower rows of teeth in the occlusal state by synthesizing the upper-jaw tooth row data and the lower-jaw tooth row data with respect to the occlusion data (S2). If the rendering image is generated on the basis of the synthetic data generated in this manner, as illustrated in Fig. 4, there is a case where the teeth included in the row of teeth of the upper jaw appears as if they project from the row of teeth of the lower jaw. In such a case, there is a possibility that the premature contact position exists. Note that detection apparatus 1 may acquire the synthetic data from another apparatus. The other apparatus may be another detection apparatus 1, and detection apparatus 1 may acquire the synthetic data generated by other detection apparatus 1 from other detection apparatus 1. Further, the other apparatus may be a server apparatus (cloud type server apparatus) that accumulates and stores synthetic data collected from at least one of other detection apparatuses 1, and detection apparatus 1 may acquire the synthetic data collected by the server apparatus from the server apparatus.

Detection apparatus 1 updates at least one of the upper-jaw tooth row data and the lower-jaw tooth row data included in the synthetic data so that the state of the upper and lower rows of teeth is displaced from the occlusal state to the open state in the rendering image (S3). While an updating amount for each updating in this case can be arbitrarily set by the user, the updating amount is, for example, 0.1 mm to 0.3 mm. By this means, in the rendering image based on the synthetic data, the row of teeth of the upper jaw is separate from the row of teeth of the lower jaw by 0.1 mm to 0.3 mm each in every updating.

Detection apparatus 1 determines whether or not the row of teeth of the upper jaw contacts the row of teeth of the lower jaw in the updated synthetic data (S4). In a case where the row of teeth of the upper jaw contacts the row of teeth of the lower jaw (S4: Yes), detection apparatus 1 executes the processing in S3 again to update at least one of the upper-jaw tooth row data and the lower-jaw tooth row data so that the state of the upper and lower rows of teeth is displaced from the occlusal state to the open state in the rendering image. By this means, the row of teeth of the upper jaw is further separated from the row of teeth of the lower jaw by 0.1 mm to 0.3 mm in the rendering image based on the synthetic data. Then, detection apparatus 1 executes the processing in S4 again and determines whether or not the row of teeth of the upper jaw contacts the row of teeth of the lower jaw in the updated synthetic data.

In a case where the row of teeth of the upper jaw does not contact the row of teeth of the lower jaw (S4: No), detection apparatus 1 specifies a position at which the row of teeth of the upper jaw contacts the row of teeth of the lower jaw until the end (immediately before updating) as the premature contact position (S5). Detection apparatus 1 stores three-dimensional data of at least one point corresponding to the specified premature contact position in memory 12 or storage apparatus 13 (S6) and ends the present processing.

As described above, detection apparatus 1 can detect the premature contact position using the upper-jaw tooth row data, the lower-jaw tooth row data and the occlusion data acquired by three-dimensional scanner 2. This eliminates the need of biting the articulating paper by the subject, and thus, contact positions of the teeth and an occlusal pressure do not fluctuate in accordance with a degree of occlusion by the subject, so that the user can detect the premature contact position with high accuracy using detection apparatus 1.

The present disclosure is not limited to the above-described examples, and various modifications and applications are further possible. Modifications applicable to the present disclosure will be described below.

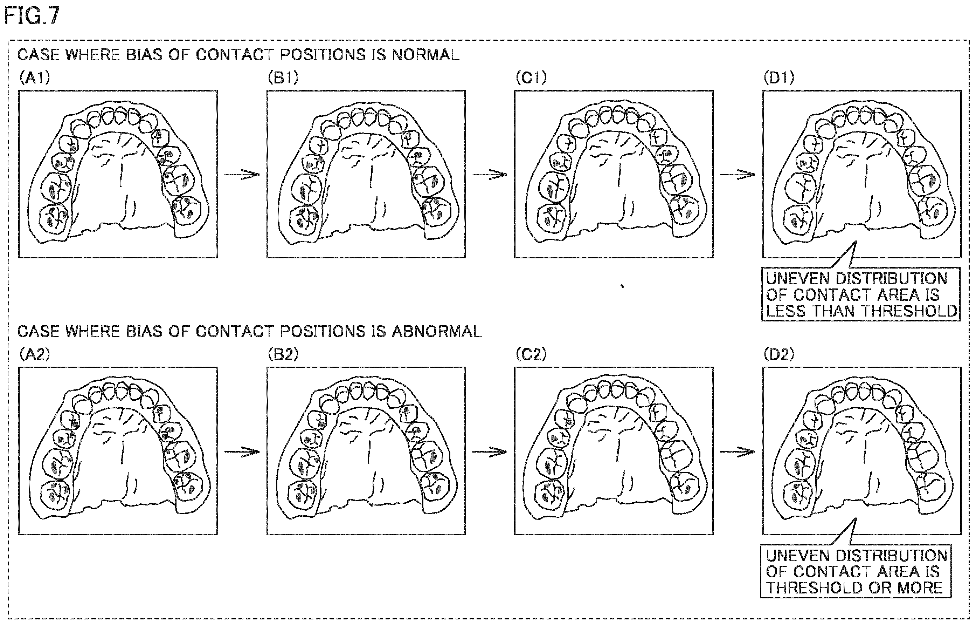

Fig. 7 is a view for explaining uneven distribution to be used by detection apparatus 1 according to a modification. Fig. 7(A1) to Fig. 7(D1) illustrate rendering images based on the synthetic data in a case where bias of the contact positions between the row of teeth of the upper jaw and the row of teeth of the lower jaw is normal. Fig. 7(A2) to Fig. 7(D2) illustrate rendering images based on the synthetic data in a case where bias of the contact positions between the row of teeth of the upper jaw and the row of teeth of the lower jaw is abnormal.

As illustrated in Fig. 7(A1) to Fig. 7(D1) and Fig. 7(A2) to Fig. 7(D2), detection apparatus 1 updates at least one of the upper-jaw tooth row data and the lower-jaw tooth row data in chronological order for each predetermined period so that the state of the upper and lower rows of teeth is displaced from the occlusal state to the open state in the rendering image. Detection apparatus 1 detects bias of a contact area between the row of teeth of the upper jaw and the row of teeth of the lower jaw for each predetermined period while at least one of the tooth row data is updated. Hereinafter, the bias of the contact area will be also referred to as "uneven distribution". In other words, detection apparatus 1 calculates uneven distribution for each predetermined period that is a timing of updating the synthetic data.

Detection apparatus 1 determines whether or not the uneven distribution calculated for each predetermined period is at a threshold set in advance or more. In a case where the uneven distribution calculated for each predetermined period is the threshold or more, detection apparatus 1 determines that the contact area between the row of teeth of the upper jaw and the row of teeth of the lower jaw is biased and executes processing of handling abnormalities. For example, detection apparatus 1 may notify the user of a fact that the contact area between the row of teeth of the upper jaw and the row of teeth of the lower jaw is biased using display 3 or the like, may notify the user of a numerical value of the uneven distribution using display 3 or the like, or may notify the user of a level (for example, a level divided into five stages) corresponding to the numerical value of the uneven distribution using display 3 or the like, as the processing of handling abnormalities.

In a case of the example in Fig. 7(A1) to Fig. 7(D1), detection apparatus 1 determines that the uneven distribution calculated for each predetermined period is less than a threshold set in advance and notifies the user of a fact that bias of the contact area between the row of teeth of the upper jaw and the row of teeth of the lower jaw is normal using display 3 or the like. On the other hand, in a case of the example in Fig. 7(A2) to Fig. 7(D2), detection apparatus 1 determines that the uneven distribution calculated for each predetermined period is the threshold set in advance or more and executes the above-described processing of handling abnormalities.

In this manner, detection apparatus 1 according to the modification can notify the user of a result of detection of bias of the contact area between the row of teeth of the upper jaw and the row of teeth of the lower jaw. The user can also examine bias of the contact area between the row of teeth of the upper jaw and the row of teeth of the lower jaw as well as the premature contact position using detection apparatus 1.

Detection apparatus 1 may be a cloud type server apparatus. In other words, calculation apparatus 11 (calculation unit) may have a function as a computer (a processor, a processing circuitry) in the cloud type server apparatus. For example, detection apparatus 1 can perform communication with a user terminal such as a smartphone possessed by the user or the subject. Detection apparatus 1 may acquire three-dimensional data acquired by three-dimensional scanner 2 and output output data including information regarding the premature contact position detected on the basis of the three-dimensional data to the user terminal. The user terminal, which can perform communication with detection apparatus 1 by starting an application downloaded in advance, may acquire information regarding the premature contact position on the basis of the output data received from detection apparatus 1 and may display the information on a display. Further, detection apparatus 1 itself may be the user terminal such as a smartphone described above.

It should be understood that the examples disclosed herein are by way of illustration and example only and are not to be taken by way of limitation. The present disclosure is not defined by the above description but only by the claims and is intended to include all changes within the claimed subject-matter. Note that the components exemplified above can be combined as appropriate.

## Claims

1. A detection apparatus (1) that is configured to detect a premature contact position at which an upper row of teeth prematurely contacts a lower row of teeth upon occlusion, the detection apparatus comprising:
an input unit (14) to which upper-jaw tooth row data, lower-jaw tooth row data and occlusion data are to be input, the upper-jaw tooth row data indicating a three-dimensional shape of a row of teeth of an upper jaw acquired by a three-dimensional scanner (2) when the upper row of teeth and the lower row of teeth are in an open state, the lower-jaw tooth row data indicating a three-dimensional shape of a row of teeth of a lower jaw acquired by the three-dimensional scanner when the upper row of teeth and the lower row of teeth are in the open state, the occlusion data indicating a three-dimensional shape of the upper row of teeth and the lower row of teeth acquired by the three-dimensional scanner when the upper row of teeth and the lower row of teeth are in an occlusal state; and
a calculation unit (11) that is configured to detect the premature contact position by generating synthetic data indicating a three-dimensional shape of the upper row of teeth and the lower row of teeth in the occlusal state by synthesizing the upper-jaw tooth row data and the lower-jaw tooth row data using the occlusion data as a reference and **characterised in that** the calculation unit is configured to detect the premature contact position by
moving at least one tooth row data of the upper-jaw tooth row data and the lower-jaw tooth row data included in the synthetic data away from the other tooth row data so that a state of the upper row of teeth and the lower row of teeth is displaced from the occlusal state to the open state; wherein
by the synthesizing the lower-jaw tooth row data, the upper-jaw tooth row data, and the occlusion data are converted into three-dimensional data of a common coordinate system, and the upper-jaw row data and the lower-jaw row data are aligned in the common coordinate system with respective corresponding portions of the occlusion data.

2. The detection apparatus (1) according to claim 1,
wherein in a case where the at least one tooth row data is moved away from the other tooth row data, the calculation unit (11) is configured to detect a portion of the upper row of teeth and the lower row of teeth in which the row of teeth of the upper jaw contacts the row of teeth of the lower jaw until an end of a separation between the upper-jaw tooth row data and the lower-jaw tooth row data, as the premature contact position.

3. The detection apparatus (1) according to claim 1 or 2,
wherein the calculation unit (11) is configured to move the at least one tooth row data away from the other tooth row data on a basis of at least one jaw motion data among jaw motion data inferred from the occlusal state, jaw motion data measured for the upper jaw and the lower jaw and predetermined average jaw motion data.

4. The detection apparatus (1) according to any one of the preceding claims,
wherein the calculation unit (11) is configured to detect bias of a contact area between the row of teeth of the upper jaw and the row of teeth of the lower jaw for each predetermined period while the at least one tooth row data is moved away from the other tooth row data.

5. A detection method for detecting a premature contact position at which an upper row of teeth prematurely contacts a lower row of teeth upon occlusion, using a computer (11), the detection method comprising:
as processing to be executed by the computer,
acquiring upper-jaw tooth row data indicating a three-dimensional shape of a row of teeth of an upper jaw acquired by a three-dimensional scanner (2) when the upper row of teeth and the lower row of teeth are in an open state, lower-jaw tooth row data indicating a three-dimensional shape of a row of teeth of a lower jaw acquired by the three-dimensional scanner when the upper row of teeth and the lower row of teeth are in the open state, and occlusion data indicating a three-dimensional shape of the upper row of teeth and the lower row of teeth acquired by the three-dimensional scanner when the upper row of teeth and the lower row of teeth are in an occlusal state; and
detecting the premature contact position by generating synthetic data indicating a three-dimensional shape of the upper row of teeth and the lower row of teeth in the occlusal state by synthesizing the upper-jaw tooth row data and the lower-jaw tooth row data using the occlusion data as a reference and moving at least one tooth row data of the upper-jaw tooth row data and the lower-jaw tooth row data included in the synthetic data away from the other tooth row data so that a state of the upper row of teeth and the lower row of teeth is displaced from the occlusal state to the open state; wherein
by the synthesizing the lower-jaw tooth row data, the upper-jaw tooth row data, and the occlusion data are converted into three-dimensional data of a common coordinate system, and the upper-jaw row data and the lower-jaw row data are aligned in the common coordinate system with respective corresponding portions of the occlusion data.

6. A detection program (100) for detecting a premature contact position at which an upper row of teeth prematurely contacts a lower row of teeth upon occlusion, the detection program causing a computer (11) to execute:
acquiring upper-jaw tooth row data indicating a three-dimensional shape of a row of teeth of an upper jaw acquired by a three-dimensional scanner (2) when the upper row of teeth and the lower row of teeth are in an open state, lower-jaw tooth row data indicating a three-dimensional shape of a row of teeth of a lower jaw acquired by the three-dimensional scanner when the upper row of teeth and the lower row of teeth are in the open state, and occlusion data indicating a three-dimensional shape of the upper row of teeth and the lower row of teeth acquired by the three-dimensional scanner when the upper row of teeth and the lower row of teeth are in an occlusal state; and
detecting the premature contact position by generating synthetic data indicating a three-dimensional shape of the upper row of teeth and the lower row of teeth in the occlusal state by synthesizing the upper-jaw tooth row data and the lower-jaw tooth row data using the occlusion data as a reference and moving at least one tooth row data of the upper-jaw tooth row data and the lower-jaw tooth row data included in the synthetic data away from the other tooth row data so that a state of the upper row of teeth and the lower row of teeth is displaced from the occlusal state to the open state; wherein
by the synthesizing the lower-jaw tooth row data, the upper-jaw tooth row data, and the occlusion data are converted into three-dimensional data of a common coordinate system, and the upper-jaw row data and the lower-jaw row data are aligned in the common coordinate system with respective corresponding portions of the occlusion data.

7. A detection system (10) that is configured to detect a premature contact position at which an upper row of teeth prematurely contacts a lower row of teeth upon occlusion, the detection system comprising:
a three-dimensional scanner (2) that is configured to acquire three-dimensional data indicating a three-dimensional shape of each of a row of teeth of an upper jaw and a row of teeth of a lower jaw; and
the detection apparatus (1) according to anyone of claims 1 to 4 that is configured to detect the premature contact position on a basis of the three-dimensional data acquired by the three-dimensional scanner (2).

## Patentansprüche

1. Detektionsvorrichtung (1), die konfiguriert ist, um eine vorzeitige Kontaktposition zu detektieren, an der eine obere Zahnreihe bei einer Okklusion vorzeitig eine untere Zahnreihe berührt, wobei die Detektionsvorrichtung aufweist:
eine Eingabeeinheit (14), in die Oberkiefer-Zahnreihendaten, Unterkiefer-Zahnreihendaten und Okklusionsdaten einzugeben sind, wobei die Oberkiefer-Zahnreihendaten eine dreidimensionale Form einer Zahnreihe eines Oberkiefers angeben, die durch einen dreidimensionalen Scanner (2) erfasst wird, wenn sich die obere Zahnreihe und die untere Zahnreihe in einem offenen Zustand befinden, wobei die Unterkiefer-Zahnreihendaten eine dreidimensionale Form einer Zahnreihe eines Unterkiefers angeben, die durch den dreidimensionalen Scanner erfasst wird, wenn sich die obere Zahnreihe und die untere Zahnreihe in dem offenen Zustand befinden, wobei die Okklusionsdaten eine dreidimensionale Form der oberen Zahnreihe und der unteren Zahnreihe angeben, die durch den dreidimensionalen Scanner erfasst wird, wenn sich die obere Zahnreihe und die untere Zahnreihe in einem okklusalen Zustand befinden; und
eine Berechnungseinheit (11), die konfiguriert ist, um die vorzeitige Kontaktposition zu detektieren, indem synthetische Daten erzeugt werden, die eine dreidimensionale Form der oberen Zahnreihe und der unteren Zahnreihe in dem okklusalen Zustand angeben, indem die Oberkiefer-Zahnreihendaten und die Unterkiefer-Zahnreihendaten unter Verwendung der Okklusionsdaten als Referenz synthetisiert werden, und **dadurch gekennzeichnet, dass** die Berechnungseinheit konfiguriert ist, um die vorzeitige Kontaktposition zu detektieren durch
Bewegen von mindestens einem der Zahnreihendaten der Oberkiefer-Zahnreihendaten und der Unterkiefer-Zahnreihendaten, die in den synthetischen Daten enthalten sind, weg von den anderen Zahnreihendaten, so dass ein Zustand der oberen Zahnreihe und der unteren Zahnreihe von dem okklusalen Zustand in den offenen Zustand verschoben wird; wobei
die Unterkiefer-Zahnreihendaten, die Oberkiefer-Zahnreihendaten und die Okklusionsdaten durch das Synthetisieren in dreidimensionale Daten eines gemeinsamen Koordinatensystems konvertiert werden und die Oberkiefer-Zahnreihendaten und die Unterkiefer-Zahnreihendaten in dem gemeinsamen Koordinatensystem mit jeweiligen entsprechenden Abschnitten der Okklusionsdaten ausgerichtet werden.

2. Detektionsvorrichtung (1) nach Anspruch 1,
wobei in einem Fall, in dem die mindestens einen Zahnreihendaten von den anderen Zahnreihendaten weg bewegt werden, die Berechnungseinheit (11) konfiguriert ist, um einen Abschnitt der oberen Zahnreihe und der unteren Zahnreihe, in dem die Zahnreihe des Oberkiefers die Zahnreihe des Unterkiefers bis zu einem Ende einer Trennung zwischen den Oberkiefer-Zahnreihendaten und den Unterkiefer-Zahnreihendaten berührt, als die vorzeitige Kontaktposition zu detektieren.

3. Detektionsvorrichtung (1) nach Anspruch 1 oder 2,
wobei die Berechnungseinheit (11) konfiguriert ist, um die mindestens einen Zahnreihendaten von den anderen Zahnreihendaten basierend auf mindestens einem von Kieferbewegungsdaten aus Kieferbewegungsdaten, die aus dem Okklusionszustand abgeleitet werden, Kieferbewegungsdaten, die für den Oberkiefer und den Unterkiefer gemessen werden, und vorbestimmten durchschnittlichen Kieferbewegungsdaten weg zu bewegen.

4. Detektionsvorrichtung (1) nach einem der vorhergehenden Ansprüche,
wobei die Berechnungseinheit (11) konfiguriert ist, um eine Abweichung eines Kontaktbereichs zwischen der Zahnreihe des Oberkiefers und der Zahnreihe des Unterkiefers für jede vorbestimmte Periode zu detektieren, während die mindestens einen Zahnreihendaten von den anderen Zahnreihendaten weg bewegt werden.

5. Detektionsverfahren zum Detektieren einer vorzeitigen Kontaktposition, an der eine obere Zahnreihe bei einer Okklusion vorzeitig eine untere Zahnreihe berührt, unter Verwendung eines Computers (11), wobei das Detektionsverfahren aufweist:
als eine durch den Computer auszuführende Verarbeitung,
Erfassen von Oberkiefer-Zahnreihendaten, die eine dreidimensionale Form einer Zahnreihe eines Oberkiefers angeben, die durch einen dreidimensionalen Scanner (2) erfasst wird, wenn sich die obere Zahnreihe und die untere Zahnreihe in einem offenen Zustand befinden, von Unterkiefer-Zahnreihendaten, die eine dreidimensionale Form einer Zahnreihe eines Unterkiefers angeben, die durch den dreidimensionalen Scanner erfasst wird, wenn sich die obere Zahnreihe und die untere Zahnreihe in dem offenen Zustand befinden, und von Okklusionsdaten, die eine dreidimensionale Form der oberen Zahnreihe und der unteren Zahnreihe angeben, die durch den dreidimensionalen Scanner erfasst wird, wenn sich die obere Zahnreihe und die untere Zahnreihe in einem okklusalen Zustand befinden; und
Detektieren der vorzeitigen Kontaktposition durch Erzeugen von synthetischen Daten, die eine dreidimensionale Form der oberen Zahnreihe und der unteren Zahnreihe in dem okklusalen Zustand angeben, indem die Oberkiefer-Zahnreihendaten und die Unterkiefer-Zahnreihendaten unter Verwendung der Okklusionsdaten als Referenz synthetisiert werden, und Bewegen von mindestens einem der Zahnreihendaten der Oberkiefer-Zahnreihendaten und der Unterkiefer-Zahnreihendaten, die in den synthetischen Daten enthalten sind, weg von den anderen Zahnreihendaten, so dass ein Zustand der oberen Zahnreihe und der unteren Zahnreihe von dem okklusalen Zustand in den offenen Zustand verschoben wird; wobei
die Unterkiefer-Zahnreihendaten, die Oberkiefer-Zahnreihendaten und die Okklusionsdaten durch das Synthetisieren in dreidimensionale Daten eines gemeinsamen Koordinatensystems konvertiert werden und die Oberkiefer-Zahnreihendaten und die Unterkiefer-Zahnreihendaten in dem gemeinsamen Koordinatensystem mit jeweiligen entsprechenden Abschnitten der Okklusionsdaten ausgerichtet werden.

6. Detektionsprogramm (100) zum Detektieren einer vorzeitigen Kontaktposition, an der eine obere Zahnreihe bei einer Okklusion vorzeitig eine untere Zahnreihe berührt, wobei das Detektionsprogramm einen Computer (11) veranlasst, auszuführen:
Erfassen von Oberkiefer-Zahnreihendaten, die eine dreidimensionale Form einer Zahnreihe eines Oberkiefers angeben, die durch einen dreidimensionalen Scanner (2) erfasst wird, wenn sich die obere Zahnreihe und die untere Zahnreihe in einem offenen Zustand befinden, von Unterkiefer-Zahnreihendaten, die eine dreidimensionale Form einer Zahnreihe eines Unterkiefers angeben, die durch den dreidimensionalen Scanner erfasst wird, wenn sich die obere Zahnreihe und die untere Zahnreihe in dem offenen Zustand befinden, und von Okklusionsdaten, die eine dreidimensionale Form der oberen Zahnreihe und der unteren Zahnreihe angeben, die durch den dreidimensionalen Scanner erfasst wird, wenn sich die obere Zahnreihe und die untere Zahnreihe in einem okklusalen Zustand befinden; und
Detektieren der vorzeitigen Kontaktposition durch Erzeugen von synthetischen Daten, die eine dreidimensionale Form der oberen Zahnreihe und der unteren Zahnreihe in dem okklusalen Zustand angeben, indem die Oberkiefer-Zahnreihendaten und die Unterkiefer-Zahnreihendaten unter Verwendung der Okklusionsdaten als Referenz synthetisiert werden, und Bewegen von mindestens einem der Zahnreihendaten der Oberkiefer-Zahnreihendaten und der Unterkiefer-Zahnreihendaten, die in den synthetischen Daten enthalten sind, weg von den anderen Zahnreihendaten, so dass ein Zustand der oberen Zahnreihe und der unteren Zahnreihe von dem okklusalen Zustand in den offenen Zustand verschoben wird; wobei
die Unterkieferzahnreihendaten, die Oberkiefer-Zahnreihendaten und die Okklusionsdaten durch das Synthetisieren in dreidimensionale Daten eines gemeinsamen Koordinatensystems konvertiert werden und die Oberkiefer-Zahnreihendaten und die Unterkiefer-Zahnreihendaten in dem gemeinsamen Koordinatensystem mit jeweiligen entsprechenden Abschnitten der Okklusionsdaten ausgerichtet werden.

7. Detektionssystem (10), das konfiguriert ist, um eine vorzeitige Kontaktposition zu detektieren, an der eine obere Zahnreihe bei einer Okklusion vorzeitig eine untere Zahnreihe berührt, wobei das Detektionssystem aufweist:
einen dreidimensionalen Scanner (2), der konfiguriert ist, um dreidimensionale Daten zu erfassen, die eine dreidimensionale Form von jeder einer Zahnreihe eines Oberkiefers und einer Zahnreihe eines Unterkiefers angeben; und
die Detektionsvorrichtung (1) nach einem der Ansprüche 1 bis 4, die konfiguriert ist, um die vorzeitige Kontaktposition auf einer Basis der dreidimensionalen Daten zu detektieren, die durch den dreidimensionalen Scanner (2) erfasst werden.

## Revendications

1. Appareil de détection (1) qui est configuré pour détecter une position de contact prématurée à laquelle une rangée de dents supérieure entre prématurément en contact avec une rangée de dents inférieure lors d'une occlusion, l'appareil de détection comprenant :
une unité d'entrée (14) dans laquelle des données de rangée de dents de mâchoire supérieure, des données de rangée de dents de mâchoire inférieure et des données d'occlusion doivent être entrées, les données de rangée de dents de mâchoire supérieure indiquant une forme tridimensionnelle d'une rangée de dents d'une mâchoire supérieure acquise par un scanner tridimensionnel (2) lorsque la rangée de dents supérieure et la rangée de dents inférieure sont dans un état ouvert, les données de rangée de dents de mâchoire inférieure indiquant une forme tridimensionnelle d'une rangée de dents d'une mâchoire inférieure acquise par le scanner tridimensionnel lorsque la rangée de dents supérieure et la rangée de dents inférieure sont à l'état ouvert, les données d'occlusion indiquant une forme tridimensionnelle de la rangée de dents supérieure et de la rangée de dents inférieure acquise par le scanner tridimensionnel lorsque la rangée de dents supérieure et la rangée de dents inférieure sont à l'état occlusal ; et
une unité de calcul (11) qui est configuré pour détecter la position de contact prématurée en générant des données synthétiques indiquant une forme tridimensionnelle de la rangée de dents supérieure et de la rangée de dents inférieure à l'état occlusal en synthétisant les données de rangée de dents de mâchoire supérieure et les données de rangée de dents de mâchoire inférieure en utilisant les données d'occlusion comme référence et **caractérisé en ce que** l'unité de calcul est configurée pour détecter la position de contact prématurée en déplaçant au moins une donnée de rangée de dents parmi les données de rangée de dents de mâchoire supérieure et les données de rangée de dents de mâchoire inférieure incluses dans les données synthétiques à l'écart des autres données de rangée de dents de sorte qu'un état de la rangée de dents supérieure et de la rangée de dents inférieure soit déplacé de l'état occlusal à l'état ouvert ; dans lequel
par la synthèse des données de rangée de dents de mâchoire inférieure, les données de rangée de dents de mâchoire supérieure et les données d'occlusion sont converties en données tridimensionnelles d'un système de coordonnées commun, et les données de rangée de dents de mâchoire supérieure et les données de rangée de dents de mâchoire inférieure sont alignées dans le système de coordonnées commun avec des parties correspondantes respectives des données d'occlusion.

2. Appareil de détection (1) selon la revendication 1,
dans lequel dans un cas où l'au moins une donnée de rangée de dents est déplacée à l'écart des autres données de rangée de dents, l'unité de calcul (11) est configurée pour détecter une partie de la rangée de dents supérieure et de la rangée de dents inférieure dans laquelle la rangée de dents de la mâchoire supérieure entre en contact avec la rangée de dents de la mâchoire inférieure jusqu'à une fin d'une séparation entre les données de rangée de dents de mâchoire supérieure et les données de rangée de dents de mâchoire inférieure, en tant que position de contact prématurée.

3. Appareil de détection (1) selon la revendication 1 ou 2,
dans lequel l'unité de calcul (11) est configurée pour déplacer l'au moins une donnée de rangée de dents à l'écart des autres données de rangée de dents sur la base d'au moins une donnée de mouvement de mâchoire parmi des données de mouvement de mâchoire déduites de l'état occlusal, des données de mouvement de mâchoire mesurées pour la mâchoire supérieure et la mâchoire inférieure et des données de mouvement de mâchoire moyenne prédéterminées.

4. Appareil de détection (1) selon l'une des revendications précédentes,
dans lequel l'unité de calcul (11) est configurée pour détecter un biais d'une zone de contact entre la rangée de dents de la mâchoire supérieure et la rangée de dents de la mâchoire inférieure pour chaque période prédéterminée pendant que l'au moins une donnée de rangée de dents est déplacée à l'écart des autres données de rangée de dents.

5. Procédé de détection pour détecter une position de contact prématurée à laquelle une rangée de dents supérieure entre prématurément en contact avec une rangée de dents inférieure lors d'une occlusion, à l'aide d'un ordinateur (11), le procédé de détection comprenant :
en tant que traitement à exécuter par l'ordinateur,
l'acquisition de données de rangée de dents de mâchoire supérieure indiquant une forme tridimensionnelle d'une rangée de dents d'une mâchoire supérieure acquise par un scanner tridimensionnel (2) lorsque la rangée de dents supérieure et la rangée de dents inférieure sont dans un état ouvert, des données de rangée de dents de mâchoire inférieure indiquant une forme tridimensionnelle d'une rangée de dents d'une mâchoire inférieure acquise par le scanner tridimensionnel lorsque la rangée de dents supérieure et la rangée de dents inférieure sont à l'état ouvert, et des données d'occlusion indiquant une forme tridimensionnelle de la rangée de dents supérieure et de la rangée de dents inférieure acquise par le scanner tridimensionnel lorsque la rangée de dents supérieure et la rangée de dents inférieure sont dans un état occlusal ; et
la détection de la position de contact prématurée en générant des données synthétiques indiquant une forme tridimensionnelle de la rangée de dents supérieure et de la rangée de dents inférieure à l'état occlusal en synthétisant les données de rangée de dents de mâchoire supérieure et les données de rangée de dents de mâchoire inférieure en utilisant les données d'occlusion comme référence et en déplaçant au moins une donnée de rangée de dents des données de rangée de dents de mâchoire supérieure et des données de rangée de dents de mâchoire inférieure incluses dans les données synthétiques à l'écart des autres données de rangée de dents de sorte qu'un état de la rangée de dents supérieure et de la rangée de dents inférieure soit déplacé de l'état occlusal à l'état ouvert ; dans lequel
par la synthèse des données de rangée de dents de mâchoire inférieure, les données de rangée de dents de mâchoire supérieure et les données d'occlusion sont converties en données tridimensionnelles d'un système de coordonnées commun, et les données de rangée de dents de mâchoire supérieure et les données de rangée de dents de mâchoire inférieure sont alignées dans le système de coordonnées commun avec des parties correspondantes respectives des données d'occlusion.

6. Programme de détection (100) pour détecter une position de contact prématurée à laquelle une rangée de dents supérieure entre prématurément en contact avec une rangée de dents inférieure lors d'une occlusion, le programme de détection amenant un ordinateur (11) à exécuter :
l'acquisition de données de rangée de dents de mâchoire supérieure indiquant une forme tridimensionnelle d'une rangée de dents d'une mâchoire supérieure acquise par un scanner tridimensionnel (2) lorsque la rangée de dents supérieure et la rangée de dents inférieure sont dans un état ouvert, des données de rangée de dents de mâchoire inférieure indiquant une forme tridimensionnelle d'une rangée de dents d'une mâchoire inférieure acquise par le scanner tridimensionnel lorsque la rangée de dents supérieure et la rangée de dents inférieure sont à l'état ouvert, et des données d'occlusion indiquant une forme tridimensionnelle de la rangée de dents supérieure et de la rangée de dents inférieure acquise par le scanner tridimensionnel lorsque la rangée de dents supérieure et la rangée de dents inférieure sont dans un état occlusal ; et
la détection de la position de contact prématurée en générant des données synthétiques indiquant une forme tridimensionnelle de la rangée de dents supérieure et de la rangée de dents inférieure à l'état occlusal en synthétisant les données de rangée de dents de mâchoire supérieure et les données de rangée de dents de mâchoire inférieure en utilisant les données d'occlusion comme référence et en déplaçant au moins une donnée de rangée de dents des données de rangée de dents de mâchoire supérieure et des données de rangée de dents de mâchoire inférieure incluses dans les données synthétiques à l'écart des autres données de rangée de dents de sorte qu'un état de la rangée de dents supérieure et de la rangée de dents inférieure soit déplacé de l'état occlusal à l'état ouvert ; dans lequel
par la synthèse des données de rangée de dents de mâchoire inférieure, les données de rangée de dents de mâchoire supérieure et les données d'occlusion sont converties en données tridimensionnelles d'un système de coordonnées commun, et les données de rangée de dents de mâchoire supérieure et les données de rangée de dents de mâchoire inférieure sont alignées dans le système de coordonnées commun avec des parties correspondantes respectives des données d'occlusion.

7. Système de détection (10) qui est configuré pour détecter une position de contact prématurée à laquelle une rangée de dents supérieure entre prématurément en contact avec une rangée de dents inférieure lors d'une occlusion, le système de détection comprenant :
un scanner tridimensionnel (2) qui est configuré pour acquérir des données tridimensionnelles indiquant une forme tridimensionnelle de chacune d'une rangée de dents d'une mâchoire supérieure et d'une rangée de dents d'une mâchoire inférieure ; et
l'appareil de détection (1) selon l'une des revendications 1 à 4 qui est configuré pour détecter la position de contact prématurée sur la base des données tridimensionnelles acquises par le scanner tridimensionnel (2).
